# FASCICULE DE BREVET EUROPEEN

(11) **EP 2 394 856 B1**
(45) Date de publication et mention de la délivrance du brevet: **07.08.2013**
(21) Numéro de dépôt: 11305714.5
(22) Date de dépôt: 09.06.2011
(51) Int. Cl.: B60R 7/04, B60R 7/06

(54) **Elément de garnissage de véhicule automobile comprenant un dispositif de support d'un appareil électronique portable**
Verkleidungselement eines Kraftfahrzeugs, das eine Haltevorrichtung für ein tragbares Elektrogerät umfasst
Trim element of a car including a device for supporting a portable electronic device

(30) Priorité: 09.06.2010 FR 1054548
(43) Date de publication de la demande: 14.12.2011
(73) Titulaire: Faurecia Intérieur Industrie, 92000 Nanterre (FR)
(72) Inventeur: Da Costa Pito, Sergio, 95800 CERGY (FR); Brancheriau, Christian, 95220 HERBLAY (FR); Brunard, Christophe, 92270 BOIS COLOMBES (FR); Ponthieu, Didier, 60480 LA NEUVILLE SAINT PIERRE (FR); Pinson, Clément, 95260 BEAUMONT SUR OISE (FR)
(74) Mandataire: Domenego, Bertrand

(56) Documents cités:
- EP-A1- 0 890 472
- EP-B1- 1 295 756
- DE-A1- 19 804 743
- DE-C2- 10 032 657
- FR-A1- 2 921 315
- JP-A- 2 158 437

## Description

La présente invention concerne un élément de garnissage de véhicule automobile du type comprenant une surface supérieure s'étendant entre un bord avant, destiné à s'étendre du côté de l'avant du véhicule, et un bord arrière, destiné à s'étendre du côté de l'habitacle du véhicule, un dispositif de support d'un appareil électronique portable étant disposé sur ladite surface supérieure, ledit dispositif de support comprenant un volet mobile en rotation autour d'un axe de rotation entre une position escamotée, dans laquelle le volet s'étend sensiblement parallèlement à la surface supérieure, et au moins une position érigée, dans laquelle le volet forme un angle non nul avec la surface supérieure, le volet comprenant des moyens de fixation de l'appareil électronique pour fixer l'appareil électronique de sorte que ledit appareil est tourné vers l'habitacle du véhicule lorsque le volet est en position érigée, ledit volet comprenant un bord avant s'étendant en regard du bord avant de la surface supérieure et un bord arrière s'étendant en regard du bord arrière de la surface supérieure.

L'invention concerne également une planche de bord comprenant un tel élément de garnissage.

De plus en plus d'appareils électroniques portables présentant un grand nombre de fonctionnalités sont à disposition des utilisateurs, et notamment des conducteurs de véhicule automobile. En particulier, des appareils du type téléphone portable ou « smartphone », assistant personnel numérique ou PDA (« personnal digital assistant »), système de navigation ou autres permettent par exemple d'aider un conducteur automobile à déterminer un trajet, de l'informer sur l'état du trafic routier ou de l'assister dans la conduite de son véhicule. De tels appareils se commandent par exemple au moyen d'un écran tactile qui doit donc être accessible au conducteur sans pour autant l'obliger à prendre l'appareil en main, ce qui constituerait un danger pour la conduite du véhicule.

Ainsi, il est connu de prévoir un dispositif de support de l'appareil électronique à proximité du conducteur, par exemple sur la planche de bord du véhicule automobile, afin d'y maintenir l'appareil en laissant l'écran dégagé pour permettre de le commander sans le prendre en main.

Il est connu de disposer le dispositif de support sur la façade verticale de la planche de bord, par exemple au voisinage de l'autoradio. Cependant, la lecture de l'écran est alors compliquée car le conducteur doit baisser le regard pour consulter les informations affichées sur l'appareil électronique.

Pour pallier cet inconvénient, le dispositif de support peut être prévu sur la surface supérieure de la planche de bord. Comme cette surface s'étend sensiblement horizontalement et que le dispositif doit être supporté sensiblement verticalement pour permettre une lecture de l'écran, le dispositif de support comprend alors un volet monté en rotation entre une position érigée, permettant un support vertical de l'appareil lorsque celui-ci est fixé sur le dispositif, et une position escamotée permettant de rabattre le volet sur la surface supérieure de la planche de bord lorsque l'appareil est retiré afin d'améliorer l'esthétisme de la planche de bord lorsque le dispositif de support ne sert pas.

Le volet passe de la position escamotée à la position érigée en pivotant de l'arrière vers l'avant, c'est-à-dire en poussant le volet vers l'avant du véhicule automobile. L'appareil électronique est ensuite fixé au volet en position érigé de sorte que son écran est visible pour le conducteur du véhicule.

FR 2 921 315 A1 divulgue un élément de garnissage correspondant au préambule de la revendication 1.

Cependant un tel volet n'est pas satisfaisant. En effet, en cas de choc contre le véhicule automobile, le volet en position érigée forme un obstacle saillant de la surface supérieure de la planche de bord. Ce obstacle peut être dangereux pour les occupants du véhicule si ils sont projetés vers l'avant et qu'ils heurtent le volet ou l'appareil électronique par exemple.

L'un des buts de l'invention est de pallier cet inconvénient en proposant un élément de garnissage de véhicule automobile permettant de fixer facilement un appareil électronique de façon visible tout en étant sûr du point de vue de la sécurité des occupants du véhicule en cas de choc.

A cet effet, l'invention concerne un élément de garnissage du type précité, dans lequel l'axe de rotation du volet s'étend au voisinage du bord arrière du volet, ledit volet pivotant vers le bord arrière de la surface supérieure entre sa position escamotée et sa position érigée.

Le volet étant mobile en rotation de l'arrière vers l'avant si un choc est appliqué contre lui, par exemple si un occupant du véhicule le heurte, le volet peut se rabattre vers sa position escamotée sans opposer de résistance. Ainsi le volet ne forme plus un obstacle saillant de la surface supérieure, ce qui le rend sûr du point de vue de la sécurité des occupants du véhicule.

Selon d'autres caractéristiques de l'élément de garnissage :
- le volet comprend des moyens de maintien du volet dans la position escamotée et dans au moins une position érigée prédéfinie ;
- les moyens de maintien comprennent une partie de verrouillage, solidaire en rotation du volet et comprenant un élément de crantage, et une partie de maintien solidaire de la surface supérieure et mobile en translation sur l'axe de rotation du volet, ladite partie de maintien comprenant au moins deux éléments de blocage présentant une forme complémentaire de l'élément de crantage, ladite partie de maintien étant poussée contre la partie de verrouillage par des moyens de rappel, le volet étant maintenu dans sa position escamotée ou une position érigée lorsque l'élément de crantage de la partie de verrouillage coopère avec l'un des éléments de blocage de la partie de maintien mobile ;

- l'élément de crantage est formé par un doigt d'indexage saillant de la partie de verrouillage, ledit doigt d'indexage étant agencé pour déplacer la partie de maintien à l'encontre des moyens de rappel lors de la rotation du volet entre ses différentes positions ;
- le dispositif de support comprend une cuve, solidaire de la surface supérieure, le volet étant monté en rotation dans ladite cuve ;
- la cuve forme un creux dans la surface supérieure, de sorte le volet s'étende sensiblement dans la continuité de la surface supérieure lorsqu'il est dans sa position escamotée ;
- la cuve comprend des moyens de passage de moyens de connexion de l'appareil électronique portable à un système électronique du véhicule automobile, lesdits moyens de connexion étant masqués par le volet lorsqu'il est dans sa position escamotée ;
- les moyens de fixation de l'appareil électronique portable sont agencés pour permettre la rotation de l'appareil électronique portable autour d'un axe de rotation sensiblement perpendiculaire au volet entre une position d'affichage vertical, dans laquelle l'appareil électronique s'étend sensiblement verticalement lorsqu'il est fixé sur le volet, et une position d'affichage horizontal, dans laquelle l'appareil électronique s'étend sensiblement horizontalement lorsqu'il est fixé au volet ;
- le volet est mobile en rotation autour d'un axe de rotation s'étendant selon l'axe du volet de sorte à permettre de régler l'orientation de l'appareil électronique portable lorsqu'il est fixé au volet en position érigée ; et
- le volet est agencé pour passer de sa position érigée à sa position escamotée en cas de choc de l'arrière vers l'avant contre ledit volet.

L'invention concerne également une planche de bord comprenant un élément de garnissage tel que décrit ci-dessus.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'une partie d'un élément de garnissage selon l'invention, le volet du dispositif de support étant en position escamotée,
- la Fig. 2 est une représentation schématique en perspective du dispositif de support de la Fig. 1, illustrant une possibilité de mouvement du volet en position érigée,
- la Fig. 3 est une représentation schématique en perspective du dispositif de support de la Fig. 1 illustrant une autre possibilité de mouvement du volet en position érigée,
- la Fig. 4 est une représentation schématique en coupe d'une partie du dispositif de support, montrant les moyens de maintien du volet.
- la Fig. 5 est une représentation schématique en perspective des moyens de maintien de la Fig. 4.

Dans la description, les termes « avant », « arrière », « supérieur », etc. sont définis selon le directions usuelles d'un véhicule automobile monté. Le terme « longitudinal » est défini selon la direction avant-arrière du véhicule et le terme « transversal » est défini selon une direction sensiblement perpendiculaire à la direction longitudinale et correspondant à la largeur du véhicule.

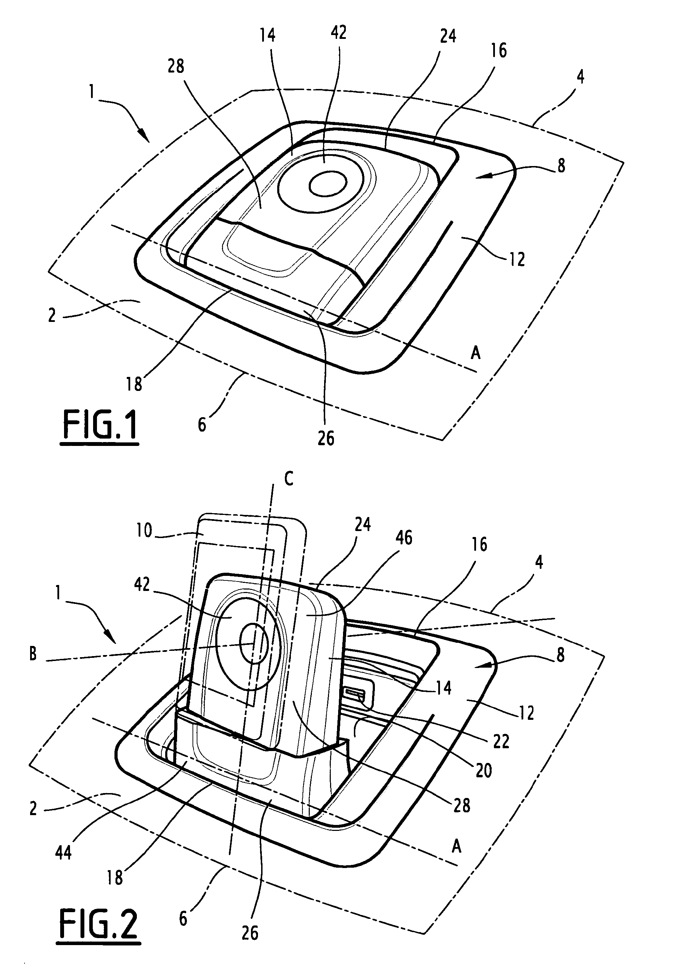

En référence à la Fig. 1, on décrit un élément de garnissage 1, représenté partiellement sur la figure. Cet élément garnissage est par exemple une planche de bord de véhicule automobile, ou forme une partie d'une planche de bord. Il est entendu que l'invention peut s'appliquer à d'autres éléments de garnissage de véhicule automobile, tels qu'une console centrale ou autre.

L'élément de garnissage 1 comprend une surface supérieure 2 s'étendant entre un bard avant 4 et un bord arrière 6. Les bords avant 4 et arrière 6 s'étendent selon une direction sensiblement transversale et la surface supérieure 2 est sensiblement horizontale lorsque l'élément de garnissage 1 est monté dans le véhicule. Dans le cas d'une planche de bord, le bord avant 4 est destiné à s'étendre du côté de l'avant du véhicule sous le pare-brise de celui-ci et le bord arrière 6 est destiné à s'étendre du côté de l'habitacle du véhicule au niveau de la façade verticale de la planche de bord.

Un dispositif de support 8 d'un appareil électronique portable 10 est disposé sur la surface supérieure 2 est intégré à l'élément de garnissage 1. Cet appareil électronique 10 peut être de tout type, mais le dispositif de support 8 est plus particulièrement adapté à des appareils 10 à écran tactile, du type téléphone portable ou « smartphone », assistant personnel numérique ou PDA (« personnal digital assistant »), système de navigation ou autre. Cette liste d'appareils est donnée à titre d'exemple et n'est en aucun cas limitative.

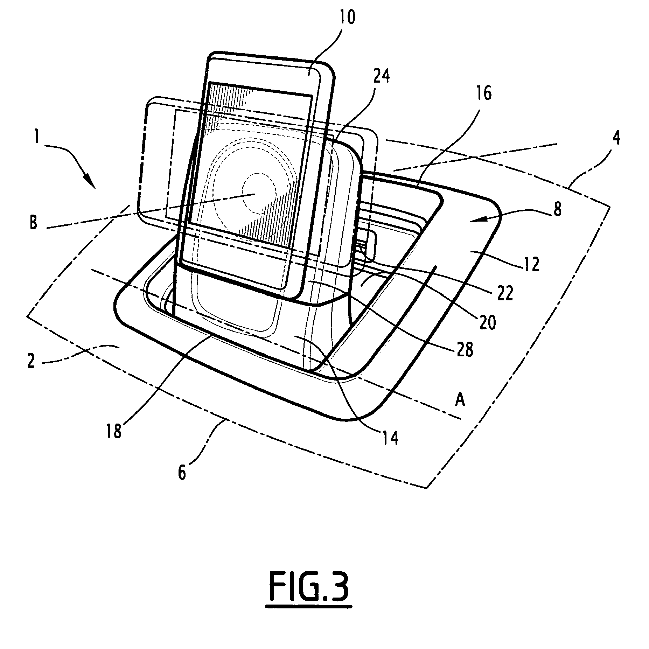

Le dispositif de support 8 comprend une cuve 12 solidaire de la surface supérieure 2 et un volet 14 monté en rotation dans la cuve 12. La cuve 12 est disposée sensiblement au centre de la surface supérieure et s'étend sensiblement longitudinalement entre un bord avant 16, sensiblement parallèle au bord avant 4 de l'élément de garnissage 1, et un bord arrière 18, sensiblement parallèle au bord arrière 6 de l'élément de garnissage. La cuve 12 s'étend par exemple en creux par rapport à la surface de support afin de former une cavité 20 dans celle-ci, comme représenté sur les Fig. 2 et 3, de sorte que le dispositif de support 8 s'intègre à l'élément de garnissage 1 sans former de saillie par rapport à la surface supérieure 2 lorsque le dispositif n'est pas utilisé, comme cela sera décrit ultérieurement. La cuve 12 comprend des moyens de passage 22 de moyens de connexion (non représentés) de l'appareil électronique 10 à un système électronique du véhicule automobile. Ces moyens de passage 22 sont par exemple formés par un orifice pratiqué dans une paroi de la cuve, comme représenté sur les Fig. 2 et 3.

Le volet 14 est monté en rotation dans la cuve 12 entre une position escamotée (Fig. 1), dans laquelle le volet 14 s'étend sensiblement parallèlement à la surface supérieure 2 à l'intérieur de la cuve 12, et au moins une position érigée prédéfinie (Fig. 2 et 3), dans laquelle le volet 14 est en saillie par rapport à la cuve 12 et forme un angle non nul avec la surface supérieure 2.

Le volet 14 présente une forme sensiblement complémentaire de celle de la cuve 12, de sorte qu'en position escamotée, le volet 14 ferme la cuve 12 et s'étend dans la continuité de la surface supérieure 2, comme représenté sur la Fig. 1. Ainsi, en position escamotée, le volet 14 ne forme pas de protubérance par rapport à la surface supérieure 2, ce qui confère une esthétique satisfaisante à l'élément de garnissage 1. En outre, dans cette position, le volet 14 ne forme pas un obstacle dur s'étendant en saillie de la surface supérieure 2 dans l'habitacle, ce qui limite les risques de blessures pour les passagers du véhicule en cas de choc contre le véhicule. En position escamotée, le volet 14 masque en outre les moyens de connexion de l'appareil électronique 10 à un système électronique du véhicule automobile, ces moyens s'étendant au fond de la cuve 12 sous le volet 14.

Le volet 14 présente également un bord avant 24, s'étendant en regard du bord avant 16 de la cuve 12 en position escamotée, et un bord arrière 26, s'étendant en regard du bord arrière 18 de la cuve 12 en position escamotée.

Le volet 14 peut par exemple être positionné dans plusieurs positions érigées, dans chacune desquelles le volet 14 forme un angle par exemple compris entre 30° et 90° avec la surface supérieure 2. Le passage de la position escamotée à une position érigée se fait par la rotation du volet 14 autour d'un axe A sensiblement transversal s'étendant au voisinage du bord arrière 26 du volet 14 et du bord arrière 18 de la cuve 12. Comme cet axe s'étend au voisinage des bords arrière 26 et 18, on comprend que la rotation entre la position escamotée et l'une des positions érigées se fait de l'avant vers l'arrière. Ainsi, la face supérieure 28 du volet 14, qui se trouve dans la continuité de la surface supérieure 2 en position escamotée, est tournée vers l'arrière du véhicule en position érigée, comme représenté sur les Fig. 2 et 3. Le fait d'avoir une rotation de l'avant vers l'arrière du volet pour le mettre en position érigée permet d'offrir une plus grande sécurité aux passagers du véhicule en cas de choc. En effet, si un passager heurte le volet 14 en position érigée, celui-ci peut se rabattre en position escamotée en basculant vers l'avant. Ainsi, le volet 14 ne forme pas un obstacle dur et résistant en cas de choc de l'arrière vers l'avant, ce qui permet de protéger les passagers du véhicule.

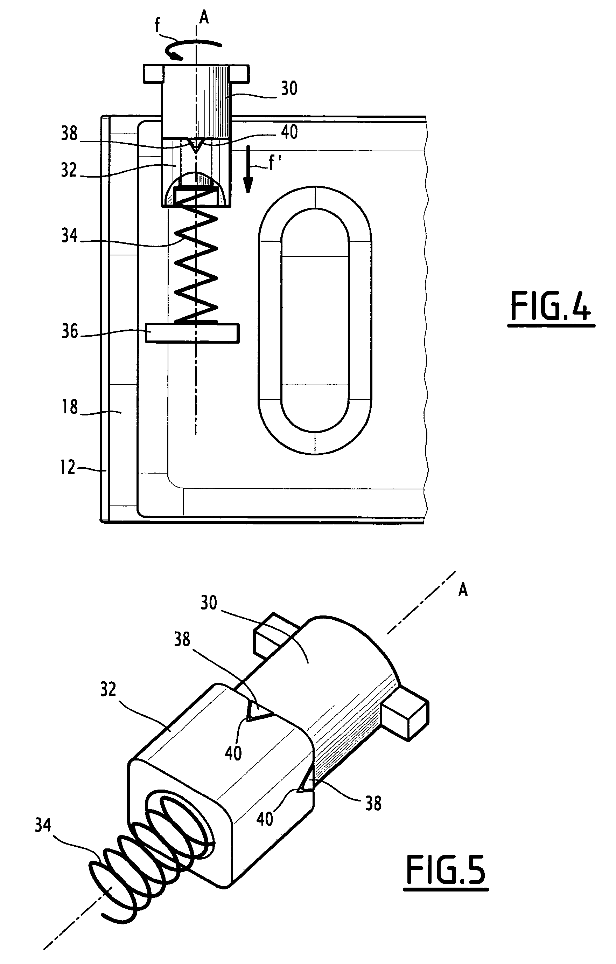

Le dispositif de support 8 comprend des moyens de maintien du volet dans la position escamotée et dans les positions érigées. Ces moyens sont représentés schématiquement sur les Fig. 4 et 5. Les moyens de maintien comprennent une partie de verrouillage 30 solidaire en rotation du volet 14 (seul cette partie de verrouillage a été représentée sur la Fig. 4, le volet n'étant pas représenté pour des raisons de simplicité) et une partie de maintien 32 solidaire de la cuve 12 et disposée en regard de la partie de verrouillage 30. La partie de maintien 32 est montée mobile en translation par rapport à la cuve selon l'axe A de rotation du volet 14 et est poussée contre la partie de verrouillage 30 par des moyens de rappel 34, par exemple formés par un ressort. A cet effet, la partie de maintien 32 et les moyens de rappel 34 se déplacent par exemple dans canal formé dans la face inférieure (non représentée) du volet 14, le canal étant fermé, d'une part, par la partie de verrouillage 30 et, d'autre part, par une butée 36 solidaire du fond de la cuve 12. Les moyens de rappel 34 sont montés entre la butée 36 et la partie de maintien 32, comme représenté sur la Fig. 4.

La partie de verrouillage 30 comprend au moins un élément de crantage 38, par exemple formé par un doigt d'indexage, saillant transversalement de la partie de verrouillage 30 vers la partie de maintien 32. La partie de maintien 32 comprend, quant à elle, au moins deux éléments de blocage 40 décalés angulairement autour de l'axe de rotation A et de forme complémentaire de l'élément de crantage 38. Ainsi, comme représentés sur les Fig. 4 et 5, les éléments de blocage 40 sont par exemple chacun formés par une encoche complémentaire du doigt d'indexage.

En position escamotée ou dans l'une des positions érigées, l'élément de crantage 38 coopère avec l'un des éléments de blocage 40, c'est-à-dire que le doigt d'indexage est introduit dans une encoche correspondante de sorte à maintenir le volet 14 dans sa position grâce aux moyens de rappels 34 qui poussent la partie de maintien 32 contre la partie de verrouillage 30. Lors du passage d'une position à une autre, la partie de verrouillage 30 tourne avec le volet 14 (flèche f de la Fig. 4), ce qui fait sortir le doigt d'indexage de l'encoche en poussant la partie de maintien 32 à l'encontre des moyens de rappels 34 (flèche f' de la Fig. 4). Le doigt d'indexage glisse sur la partie de maintien 32 jusqu'à ce retrouver en regard d'une encoche correspondant à une autre position du volet 14, les moyens de rappels 34 poussent alors la partie de maintien 32 contre la partie de verrouillage 30, le doigt d'indexage entrant dans l'encoche, ce qui permet de maintenir le volet 14 dans sa nouvelle position. La partie de maintien 30 comprend autant d'éléments de blocage 40 qu'il y a de positions prévues pour le volet 14. En variante, le doigt d'indexage peut être prévu sur la partie de maintien 32 et les encoches prévues dans la partie de verrouillage.

De tels moyens de maintien permettent de maintenir le volet 14 dans la position choisie de façon simple, sans nécessiter un verrouillage ou un déverrouillage particulier de la part de l'utilisateur en dehors de la rotation du volet 14. Ces moyens sont agencés pour maintenir le volet 14 en position lorsqu'il supporte un appareil électronique portable 10. Au-delà d'une certaine force, les moyens de maintien sont agencés pour permettre la rotation du volet 14, notamment lorsqu'un utilisateur souhaite faire passer le volet 14 d'une position à une autre ou lors d'un choc de l'arrière vers l'avant, de sorte à permettre au volet de se rabattre dans sa position escamotée.

En position érigée, le volet 14 permet de supporter un appareil électronique portable 10 de sorte que son écran soit face aux occupants du véhicule automobile selon une certaine orientation en fonction de l'angle formé entre le volet 14 et la surface supérieure 2. Dans cette position, l'écran est accessible pour consulter son affichage et pour l'utiliser, dans le cas d'un écran tactile.

La fixation de l'appareil électronique 10 sur le volet 14 se fait par des moyens de fixation 42 disposés sur la face supérieure 28 du volet 14. Sur les figures, ces moyens de fixation 42 ont été représentés schématiquement. Ils peuvent être de toute nature adaptée. Selon un mode de réalisation, ces moyens de fixation 42 sont adaptés pour permettre une rotation autour d'un axe de rotation B sensiblement perpendiculaire au volet de l'appareil électronique portable 10 entre une position d'affichage vertical en mode « portrait », représentée en traits pleins sur la Fig. 3, et une position d'affichage horizontal en mode « paysage », représentée en traits pointillés sur la Fig. 3. En mode portrait, l'écran de l'appareil 10 s'étend sensiblement verticalement et en mode paysage, l'écran s'étend sensiblement horizontalement. La rotation de l'appareil 10 autour de l'axe B grâce aux moyens de fixation permet d'adapter la position de l'écran pour une meilleure lecture de son affichage.

Selon un mode de réalisation, le volet 14 est réalisé en deux parties 44 et 46, dont l'une, portant les moyens de fixation 42 de l'appareil 10, est mobile en rotation par rapport à l'autre autour d'un axe de rotation C s'étendant selon l'axe du volet 14 de sorte à permettre de régler l'orientation de l'appareil électronique portable 10 lorsqu'il est fixé au volet 14 en position érigée. Ainsi, par rotation autour de l'axe C, l'écran de l'appareil 10 peut être tourné vers le conducteur ou vers le passager avant du véhicule automobile par exemple, comme représenté sur la Fig. 2.

L'élément de garnissage 1 a été décrit selon un mode de réalisation particulier. Des variantes peuvent être apportées à l'invention sans sortir du cadre de celle-ci. Ainsi, le volet 14 peut être fixé directement sur la surface supérieure 2 sans être disposé dans une cuve 12.

L'élément de garnissage 1 décrit ci-dessus permet de supporter un appareil électronique portable sur une surface sensiblement horizontale, par exemple la surface supérieure de la planche de bord du véhicule automobile, ce qui permet de positionner cet appareil à un endroit où la lecture ou la manipulation de celui-ci est particulièrement facilitée. En outre, le dispositif de support est particulièrement simple à utiliser et offre un grand choix dans le positionnement de l'appareil par rapport à l'utilisateur. Enfin, ce dispositif de support offre une grande sécurité, le volet pouvant se rabattre dans sa position escamotée en cas de choc contre celui-ci.

## Revendications

1. Elément de garnissage (1) de véhicule automobile comprenant une surface supérieure (2) s'étendant entre un bord avant (4), destiné à s'étendre du côté de l'avant du véhicule, et un bord arrière (6), destiné à s'étendre du côté de l'habitacle du véhicule, un dispositif de support (8) d'un appareil électronique portable (10) étant disposé sur ladite surface supérieure (2), ledit dispositif de support (8) comprenant un volet (14) mobile en rotation autour d'un axe de rotation (A) entre une position escamotée, dans laquelle le volet (14) s'étend sensiblement parallèlement à la surface supérieure (2), et au moins une position érigée, dans laquelle le volet (14) forme un angle non nul avec la surface supérieure (2), le volet (14) comprenant des moyens de fixation (42) de l'appareil électronique (10) pour fixer l'appareil électronique (10) de sorte que ledit appareil (10) est tourné vers l'habitacle du véhicule lorsque le volet (14) est en position érigée, ledit volet (14) comprenant un bord avant (24) s'étendant en regard du bord avant (4) de la surface supérieure (2) et un bord arrière (26) s'étendant en regard du bord arrière (6) de la surface supérieure (2), **caractérisé en ce que** l'axe de rotation (A) du volet (14) s'étend au voisinage du bord arrière (26) du volet (14), ledit volet (14) pivotant vers le bord arrière (6) de la surface supérieure (2) entre sa position escamotée et sa position érigée.

2. Elément de garnissage selon la revendication 1, **caractérisé en ce que** le volet (14) comprend des moyens de maintien du volet (14) dans la position escamotée et dans au moins une position érigée prédéfinie.

3. Elément de garnissage selon la revendication 2, **caractérisé en ce que** les moyens de maintien comprennent une partie de verrouillage (30), solidaire en rotation du volet (14) et comprenant un élément de crantage (38), et une partie de maintien (32) solidaire de la surface supérieure (2) et mobile en translation sur l'axe de rotation (A) du volet (14), ladite partie de maintien (32) comprenant au moins deux éléments de blocage (40) présentant une forme complémentaire de l'élément de crantage (38), ladite partie de maintien (32) étant poussée contre la partie de verrouillage (30) par des moyens de rappel (34), le volet (14) étant maintenu dans sa position escamotée ou une position érigée lorsque l'élément de crantage (38) de la partie de verrouillage (30) coopère avec l'un des éléments de blocage (40) de la partie de maintien mobile (32).

4. Elément de garnissage (1) selon la revendication 3, **caractérisé en ce que** l'élément de crantage (38) est formé par un doigt d'indexage saillant de la partie de verrouillage (30), ledit doigt d'indexage étant agencé pour déplacer la partie de maintien (32) à l'encontre des moyens de rappel (34) lors de la rotation du volet (14) entre ses différentes positions.

5. Elément de garnissage selon l'une quelconque des revendications 1 à 4, **caractérisé en ce que** le dispositif de support (8) comprend une cuve (12), solidaire de la surface supérieure (2), le volet (14) étant monté en rotation dans ladite cuve (12).

6. Elément de garnissage selon la revendication 5, **caractérisé en ce que** la cuve (12) forme un creux dans la surface supérieure (2), de sorte le volet (14) s'étende sensiblement dans la continuité de la surface supérieure (2) lorsqu'il est dans sa position escamotée.

7. Elément de garnissage selon la revendication 5 ou 6, **caractérisé en ce que** la cuve (12) comprend des moyens de passage (22) de moyens de connexion de l'appareil électronique portable (10) à un système électronique du véhicule automobile, lesdits moyens de connexion étant masqués par le volet (14) lorsqu'il est dans sa position escamotée.

8. Elément de garnissage selon l'une quelconque des revendications 1 à 7, **caractérisé en ce que** les moyens de fixation (42) de l'appareil électronique portable sont agencés pour permettre la rotation de l'appareil électronique portable (10) autour d'un axe de rotation (B) sensiblement perpendiculaire au volet (14) entre une position d'affichage vertical, dans laquelle l'appareil électronique (10) s'étend sensiblement verticalement lorsqu'il est fixé sur le volet (14), et une position d'affichage horizontal, dans laquelle l'appareil électronique (10) s'étend sensiblement horizontalement lorsqu'il est fixé au volet (14).

9. Elément de garnissage selon l'une quelconque des revendications 1 à 8, **caractérisé en ce que** le volet (14) est mobile en rotation autour d'un axe de rotation (C) s'étendant selon l'axe du volet (14) de sorte à permettre de régler l'orientation de l'appareil électronique portable (10) lorsqu'il est fixé au volet (14) en position érigée.

10. Elément de garnissage selon l'une quelconque des revendications 1 à 9, **caractérisé en ce que** le volet (14) est agencé pour passer de sa position érigée à sa position escamotée en cas de choc de l'arrière vers l'avant contre ledit volet (14).

11. Planche de bord de véhicule automobile comprenant un élément de garnissage (1) selon l'une quelconque des revendications 1 à 10.

## Patentansprüche

1. Verkleidungselement (1) für ein Kraftfahrzeug, aufweisend eine obere Fläche (2), die sich zwischen einem vorderem Rand (4), der dazu bestimmt ist, sich auf Seiten der Front des Fahrzeugs zu erstrecken, und einem hinteren Rand (6) erstreckt, der dazu bestimmt ist, sich auf Seiten der Fahrgastzelle des Fahrzeugs erstrecken, eine Haltevorrichtung (8) für ein tragbares elektronisches Gerät (10), die an der oberen Fläche (2) angeordnet ist, wobei die Haltevorrichtung (8) eine Klappe (14) aufweist, die um eine Drehachse (A) drehbewegbar ist zwischen einer Einfahrposition, in welcher die Klappe (14) sich im Wesentlichen parallel zur oberen Fläche (2) erstreckt, und wenigstens einer Ausfahrposition, in welcher die Klappe (14) einen Winkel ungleich Null mit der oberen Fläche (2) bildet, wobei die Klappe (14) Befestigungsmittel (42) für das elektronischen Gerät (10) aufweist zum Befestigen des elektronischen Geräts (10) derart, dass dieses Gerät (10) zur Fahrgastzelle des Fahrzeugs hingewandt ist, wenn die Klappe (14) in ihrer Ausfahrposition ist, wobei die Klappe (14) aufweist einen vorderen Rand (24), der sich gegenüber dem vorderen Rand (4) der oberen Fläche (2) erstreckt, und einen hinteren Rand (26), der sich gegenüber dem hinteren Rand (6) der oberen Fläche erstreckt, **dadurch gekennzeichnet, dass** die Drehachse (A) der Klappe (14) sich benachbart zum hinteren Rand (26) der Klappe (14) erstreckt, wobei die Klappe (14) zwischen ihrer Einfahrposition und ihrer Ausfahrposition zum hinteren Rand (6) der oberen Fläche (2) hin schwenkt.

2. Verkleidungselement gemäß Anspruch 1, **dadurch gekennzeichnet, dass** die Klappe (14) Mittel zum Aufrechterhalten der Klappe (14) in der Einfahrposition und in wenigstens einer vordefinierten Ausfahrposition aufweist.

3. Verkleidungselement gemäß Anspruch 2, **dadurch gekennzeichnet, dass** die Mittel zum Aufrechterhalten aufweisen einen Verriegelungsteil (30), der drehfest mit der Klappe (14) verbunden ist und der ein Rastelement (38) aufweist, und einen Aufrechterhaltungsteil (32), der mit der oberen Fläche (2) verbunden ist und der auf der Drehachse (A) der Klappe (14) translationsbewegbar ist, wobei der Aufrechterhaltungsteil (32) wenigstens zwei Blockier-Elemente (40) aufweist, die eine zu dem Rastelement (38) komplementäre Form haben, wobei der Aufrechterhaltungsteil (32) von Rückstellungsmitteln (34) gegen den Verriegelungsteil (30) gedrückt ist, wobei die Klappe (14) in ihrer Einfahrposition oder in einer Ausfahrposition aufrechtgehalten ist, wenn das Rastelement (38) des Verriegelungsteils (30) mit einem der Blockier-Elemente (40) des bewegbaren Aufrechterhaltungsteils (32) zusammenwirkt.

4. Verkleidungselement (1) gemäß Anspruch 3, **dadurch gekennzeichnet, dass** das Rastelement (38) von einem Indexfinger des Verriegelungsteils (30) gebildet ist, wobei der Indexfinger eingerichtet ist, um beim Drehen der Klappe (14) zwischen deren verschiedenen Position den Aufrechterhaltungsteil (32) gegen die Rückstellmittel (34) zu deplatzieren.

5. Verkleidungselement gemäß einem der Ansprüche 1 bis 4, **dadurch gekennzeichnet, dass** die Haltevorrichtung (8) eine Wanne (12) aufweist, die mit der oberen Fläche (2) verbunden ist, wobei die Klappe (14) in der Wanne (12) drehbewegbar montiert ist.

6. Verkleidungselement gemäß Anspruch 5 oder 6, **dadurch gekennzeichnet, dass** die Wanne (12) in der oberen Fläche (2) einen Hohlraum bildet, derart, dass sich die Klappe (14) im Wesentlichen bündig zur oberen Fläche (2) erstreckt, wenn sie in ihrer Einfahrposition ist.

7. Verkleidungselement gemäß Anspruch 5 oder 6, **dadurch gekennzeichnet, dass** die Wanne (12) Mittel zum Passieren (22) von Mitteln zum Anschließen des tragbaren elektronischen Geräts (10) an ein elektronisches System des Kraftfahrzeugs hat, wobei die Mittel zum Anschließen von der Klappe (14) verdeckt sind, wenn diese in ihrer Einfahrposition ist.

8. Verkleidungselement gemäß einem der Ansprüche 1 bis 7, **dadurch gekennzeichnet, dass** die Befestigungsmittel (42) für das tragbare elektronische Gerät eingerichtet sind, um die Drehung des tragbaren elektronischen Geräts (10) um eine Drehachse (B) zu erlauben, die im Wesentlichen senkrecht zur Klappe (14) ist, zwischen einer vertikalen Anzeigeposition, in welcher sich das elektronische Gerät (10) im Wesentlichen vertikal erstreckt, wenn es an der Klappe (14) befestigt ist, und einer horizontalen Anzeigeposition, in welcher sich das elektronische Gerät (10) im Wesentlichen horizontal erstreckt, wenn es an der Klappe (14) befestigt ist.

9. Verkleidungselement gemäß einem der Ansprüche 1 bis 8, **dadurch gekennzeichnet, dass** die Klappe (14) um eine Drehachse (C) drehbewegbar ist, die sich entlang der Achse der Klappe (14) erstreckt, um zu ermöglichen, die Ausrichtung des tragbaren elektronischen Geräts (10) einzustellen, wenn dieses an der Klappe (14) in der Ausfahrposition befestigt ist.

10. Verkleidungselement gemäß einem der Ansprüche 1 bis 9, **dadurch gekennzeichnet, dass** die Klappe (14) eingerichtet ist, um von ihrer Ausfahrposition in ihre Einfahrposition überzugehen im Falle eines von hinten nach vorne gerichteten Stoßes gegen die Klappe (14).

11. Armaturenbrett für ein Kraftfahrzeug, aufweisend ein Verkleidungselement (1) gemäß einem der Ansprüche 1 bis 10.

## Claims

1. An automobile trim element (1) of the type comprising an upper surface (2) extending between a front edge (4), intended to extend on the front side of the vehicle, and a rear edge (6), intended to extend on the passenger cab side of the vehicle, a holder (8) for a portable electronic device (10) being arranged on said upper surface (2), said holder (8) comprising a flap (14) movable in rotation around an axis (A) of rotation between a retracted position, in which the flap (14) extends substantially parallel to the upper surface (2), and at least one upright position, in which the flap (14) forms a non-zero angle with the upper surface (2), the flap (14) comprising a fastening means (42) of the electronic device (10) for fastening the electronic device (10) so that said device (10) faces the passenger cab of the vehicle when the flap (14) is in the upright position, said flap comprising a front edge (24) extending opposite the front edge (4) of the upper surface (2) and a rear edge (26) extending opposite the rear edge (6) of the upper surface (2), **characterized in that** the axis of rotation (A) of the flap (14) extends near the rear edge (26) of the flap (14), said flap (14) pivoting towards the rear edge (6) of the upper surface (2) between its retracted position and its upright position.

2. The trim element according to claim 1, **characterized in that** the flap (14) comprises a maintenance means for keeping the flap (14) in the retracted position and in at least one predefined upright position.

3. The trim element according to claim 2, **characterized in that** the maintenance means comprises a locking part (30), integral in rotation with the flap (14) and comprising a notching element (38), and a maintenance part (32) secured to the upper surface (2) and movable in translation on the axis of rotation (A) of the flap (14), said maintenance part (32) comprising at least two locking elements (40) having a shape complementary to the notching element (38), said maintenance part (32) being pushed against the locking part (30) by the return means (34), the flap (14) being kept in its retracted position or an upright position when the notching element (38) of the locking part (30) cooperates with one of the locking elements (40) of the movable maintenance part (32).

4. The trim element (1) according to claim 3, **characterized in that** the notching element (38) is formed by an indexing finger protruding from the locking part (30), said indexing finger being arranged to move the maintenance part (32) against the return means (34) when the flap (14) rotates between its different positions.

5. The trim element according to any one of claims 1 to 4, **characterized in that** the holder (8) comprises a shaft (12), secured to the upper surface (2), the flap (14) being rotatably mounted in said shaft (12).

6. The trim element according to claim 5, **characterized in that** the shaft (12) forms a hollow in its upper surface (2), so that the flap (14) extends substantially in the continuity of the upper surface (2) when it is in its retracted position.

7. The trim element according to claim 5 or 6, **characterized in that** the shaft (12) comprises a passage means (22) for a means for connecting the portable electronic device (10) to an electronic system of the motor vehicle, said connection means being concealed by the flap (14) when it is in its retracted position.

8. The trim element according to any one of claims 1 to 7, **characterized in that** the fastening means (42) of the portable electronic device is arranged to allow the portable electronic device (10) to rotate around an axis of rotation (B) substantially perpendicular to the flap (14) between a vertical display position, in which the electronic device (10) extends substantially vertically when it is fastened on the flap (14), and a horizontal display position, in which the electronic device (10) extends substantially horizontally when it is fastened to the flap (14).

9. The trim element according to any one of claims 1 to 8, **characterized in that** the flap (14) is rotationally movable around an axis of rotation (C) extending along the axis of the flap (14) so as to make it possible to adjust the orientation of the portable electronic device (10) when it is fastened to the flap (14) in the upright position.

10. The trim element according to any one of claims 1 to 9, **characterized in that** the flap (14) is arranged to go from its upright position to its retracted position in case of impact from back to front against said flap (14).

11. A motor vehicle dashboard comprising a trim element (1) according to any one of claims 1 to 10.
